# EUROPEAN PATENT SPECIFICATION

(11) **EP 3 586 462 B1**
(45) Date of publication and mention of the grant of the patent: **02.03.2022**
(21) Application number: 18709496.6
(22) Date of filing: 27.02.2018
(51) Int. Cl.: H04L 1/18

(54) **FEEDBACK WITH CONFIGURABLE LATENCY**
FEEDBACK MIT KONFIGURIERBARER LATENZ
FEEDBACK AVEC LATENCE CONFIGURABLE

(30) Priority: 27.02.2017 EP 17158101
(43) Date of publication of application: 01.01.2020
(73) Proprietor: IPCom GmbH & Co. KG, 82049 Pullach (DE)
(72) Inventor: BIENAS, Maik, 38170 Schöppenstedt (DE); HANS, Martin, 31162 Bad Salzdetfurth (DE)
(74) Representative: Tomlinson, Edward James
(86) International application number: PCT/EP2018/054773
(87) International publication number: WO 2018/154135

(56) References cited:
- EP-A1- 1 635 518
- EP-A2- 2 184 884
- EP-A2- 2 613 470
- US-A1- 2004 105 386

## Description

The present invention relates to a method and devices for providing feedback in respect of a successful, or otherwise, receipt of transmitted data in a communications system, in particular a mobile communication system.

Mobile communication systems have to cope with volatile and unreliable transmission conditions due to effects like multipath fading of the radio channel. Some effects may be compensated for, for example by using adaptive modulation or forward error correction (FEC), so that the bits of data are received without errors. In some cases, bit errors cannot be avoided. In this case error detection means are used to detect erroneous data packets and to request a retransmission. This is commonly known as automatic repeat request (ARQ).

In LTE, hybrid automatic repeat request (HARQ) is used. This combines FEC and ARQ. Each data packet includes some redundant bits, that enable the receiver to detect an erroneous packet. The time to transmit each packet is of length 1 ms and is called a transmit time interval (TTI). The TTI is defined as the time interval used to transmit exactly one so called "transport block". HARQ in LTE requires feedback for each transport block. In case, that the receiver detects an error in the latest received transport block, it transmits a NACK (negative acknowledgement) message back to the transmitter. The receiver, having stored the latest transport block, will then transmit it again upon reception of a NACK. This retransmission may include different types of redundant bits, based on the selected HARQ mode. The receiver will then again check the received transport block for errors. Optionally, based on the HARQ mode, it will combine the previously received transport block with the new transport block before decoding.

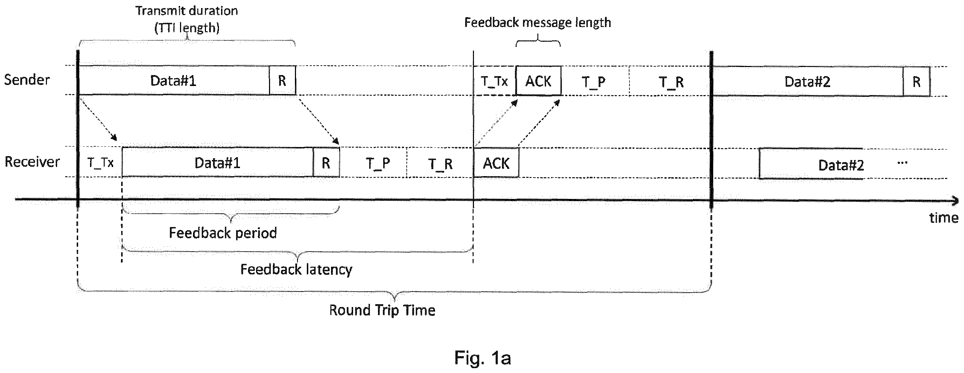

If no error is detected in the transport block, the receiver transmits an ACK (positive acknowledgement) message to the transmitter, which will erase the stored old transport block and stores and transmit the next transport block. The transmitter always waits for feedback information (ACK or NACK) before transmitting a new packet within the same HARQ process which means that the transmitter implicitly knows to which packet a feedback message refers. This eliminates the necessity to explicitly send a packet reference with the feedback information. This method is called stop-and-wait, as the data flow stops, until an ACK is received. To reduce the additional latency of the waiting for an ACK, eight HARQ processes are used in LTE in parallel on each link. Nevertheless, the process includes a certain latency which cannot be undercut. The round trip time (RTT) is indicative of the latency. The elements of the RTT are depicted in Fig. 1a. The RTT consists of a transmission delay (T_Tx), and transmission times for a transport block length (i.e. the TTI length, consisting of the data part and redundancy bits "R") and a feedback message length, a time to process the received data and to generate the feedback (T_P) and the time to wait until the start of a next transmit resource (T_R). One part of the RTT is called "feedback latency" in this specification. It consists of the TTI length, the time to process the received data (T_P) and the time to wait for the next feedback resource (T_R). When this specification talks about latency reduction, this will also mean reduction of the RTT. The depicted message flow in figure 1a is shown for the case, that the initial transmission of Data#1 was successful. The Field labelled with "R" contains the redundant bits for the preceding data-field.

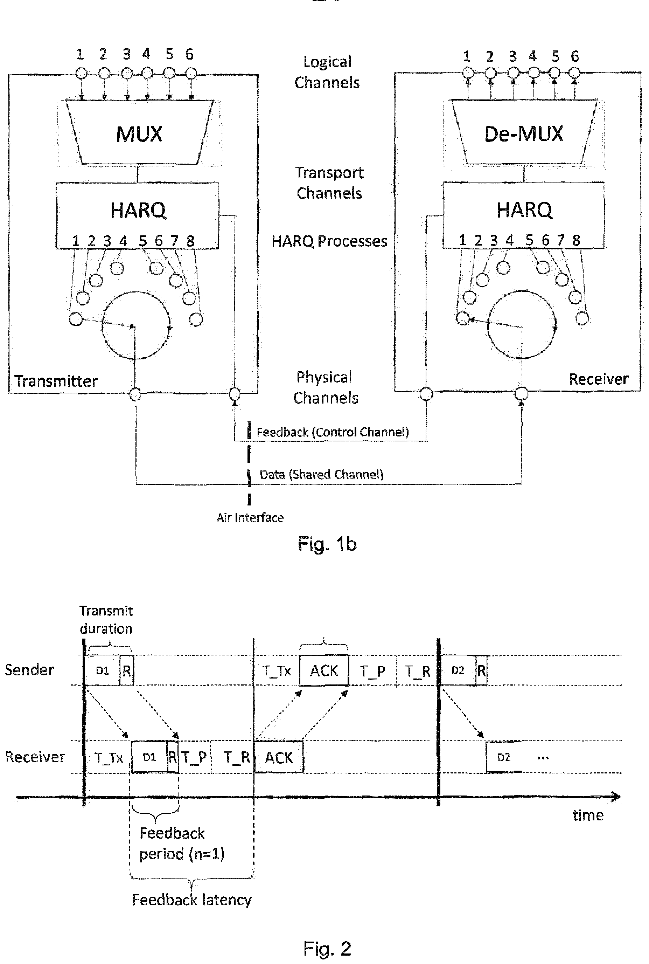

The current HARQ architecture as applied by LTE is depicted in Fig. 1b. All active connections provided to the receiver use the same eight HARQ processes, independent of the respective service needs. After a transport block was transmitted via HARQ process "h", the next packet is transmitted via another HARQ process. The receiver needs to know the HARQ process ID of each received packet. Two modes are specified: In case the process ID is increased by one automatically at the transmitter and receiver (i.e. without explicit signalling) after a specified number of transmitted transport blocks (e.g. after each single block or after each fourth block), the mode is called "synchronous" (depicted in Fig. 1b). This mode is applied in the LTE uplink. In case each transmitted transport block includes the current HARQ process ID, the mode is called "asynchronous" as the transmitter can decide to "jump" between HARQ processes. This mode is applied in the LTE downlink.

As well as HARQ, which is controlled by the MAC layer, LTE uses an additional ARQ mechanism in the RLC layer. The RLC ARQ mechanism does not require feedback after each packet (RLC PDU). Instead, feedback is either requested by the sender by transmission of a "polling field" to the receiver, or the receiver detects a trigger event, which could be either the detection of a reception failure of an RLC PDU or a timer expiration. In all these cases, the feedback may relate to multiple packets, i.e. one feedback message may contain feedback information related to several RLC PDUs. This method is not usable to steer the feedback latency as it cannot affect the physical resources directly (e.g. the transmit duration) and as latency is mainly caused by the re-transmissions requested by the HARQ mechanism, which is also not steerable by the RLC layer.

Currently 3GPP studies potential enhancements for the next generation of the mobile communication system (5G). One aspect to be fulfilled by the 5G network is related to the wide range of different service requirements, e.g. a latency requirement of 1ms for ultra-low latency services in contrast to ultra-low energy consumption requirements for some device types (e.g. smart meters). It is required by the radio access network (RAN) to dynamically adapt the parameters of the physical layer to the current service needs. Such dynamic adaptions may also be required by the TTI length, which is unchangeable in the current LTE system.

US 9,319,200 describes a method to control a device-to-device (D2D) transmission, whereas ACK/NACK feedback for communications over the DMC link is aggregated according to the length of the sliding window. The aggregated feedback contains individual feedback for each received transport block, i.e. a single combined feedback information is not generated. The method is not suited to steer feedback latency, as the latency requirement is not considered. US 9,042,279 describes a method for automatic repeat request, wherein the feedback information is aggregated for a set of consecutive sub frames in order to save power. The aggregated feedback contains individual feedback for each received transport block. Further the method is not suited to steer feedback latency, as the latency requirement is not considered.

US 8,780,740 describes a method for controlling downlink packet latency. The current latency is compared with the target latency, and the scheduling of the next packets is adjusted to be around the target latency. The feedback latency is not changeable in this method and it is not possible to save feedback overhead in case, that the service has loose latency requirements and high power saving requirements.

EP 2 613 470 A2 describes a system in which positive HARQ acknowledgement messages are sent to a plurality of communication devices conforming to a specified rule or a HARQ acknowledgement is sent to at least one communication device when a plurality of uplink transmissions conforms to a specified rule.

US 2004/0105386 A1 describes the transmission of an acknowledgement message after a certain number of packet data have been received, the acknowledgement message including an acknowledgement status for each of the certain number of packet data, the certain number being six in the example.

EP 1 635 518 A1 describes the use of multiple channels for simultaneously transmitting multiple data packets in retransmission processing, wherein the number of idle channels and the number of retransmission packets are compared.

EP 2 184 884 A2 describes a HARQ arrangement in which HARQ processes for transmission are assigned in accordance with predicted channel conditions.

The current mobile communication system LTE is not able to provide ultra-low latency services and is not able to optimize the radio interface for ultra-low power consumption requirements. This is mainly due to the fixed (unchangeable) transmit duration (TTI length) of 1 ms and the requirement of the current HARQ mechanism to send feedback for each transport block.

Currently being discussed are enhancements for the cellular mobile air interface to provide ultra low latency reducing the TTI to 0.1ms - 0.2ms, thereby increasing the resulting HARQ overhead significantly. For low-power requirement, long TTIs and reduced signalling are discussed as configuration alternatives. Known arrangements do not provide a system in which means for low-latency and low-power coexist in a way that a dynamic per service selection between parameters is used to provide optimized latency and power consumption without the need of re-configuration.

3GPP document R1-164068 from the TSG RAN WG1 meeting #87 using a short TTI in combination with a legacy TTI of 1 ms for services which require a short latency. 3GPP technical report TR 36.881 V14.0.0 describes the use of short TTIs in section 8.5, allowing adjustment of the feedback delay but not an adjustment of the number of received transport blocks for calculation of a combined feedback message.

It is an object of the present invention to enable a configurable feedback latency while using the same fixed and short TTI length for all feedback latencies, which will enable the communication system to optimise the radio interface for services with a wide range of different latency and power consumption requirements. This invention allows optimization of the 5G air-interface to ultra-low latency and ultra-low power services dynamically without the need for time consuming re-configuration.

The present invention provides a method according to claim 1.

Then invention further provides a corresponding transmitter and receiver which may be either a base station or a user equipment device. Preferred aspects of the invention are provided according to the dependent claims.

The invention is directed to a method for (hybrid) automatic repeat request in a mobile communication system, which provides a configurable feedback latency while using the same fixed and short transmit duration (the time period where the physical resources are occupied to transmit one transport block) for all feedback latencies. The method enables the communication system to dynamically optimize the radio interface for a wide range of service requirements ranging from ultra-low latency to ultra-low power consumption.

This invention provides a method for HARQ with a configurable feedback latency. The solution provided enables the receiver to generate and transmit a single combined feedback information from a configurable number of received transport blocks and it uses a fixed and very short transmit duration (for example 0.1 ms).

One aspect of the invention is to receive transport blocks within a fixed transmit duration, identical over time and for all connections, and to provide feedback information in the form of ACK/NACK information back to the transmitter only every n-th received transport block with a dynamic value of "n". The feedback information contains a single combined ACK/NACK for all transport blocks for which the feedback is sent. The number "n" is selected according to the latency and power consumption requirement of the device, the subscriber or the transmitted data (i.e. of the related service).

Preferred examples of the invention will now be described with reference to the accompanying drawings in which:
Fig. 1a is a schematic representation of a conventional HARQ transmission sequence;
Fig. 1b is a schematic representation of a conventional HARQ transmitter and receiver;
Fig. 2 is a schematic representation of a transmission sequence incorporating the invention for a low latency transmission;
Fig. 3 is a schematic representation of a transmission sequence incorporating the invention for a medium latency transmission;
Fig. 4 is a schematic representation of a transmission sequence incorporating the invention for a high latency transmission;
Fig. 5 is a schematic representation of a transmitter and receiver using multiple HARQ processes for multiple transmission services;
Fig. 6 is a further schematic representation of a transmitter and receiver using multiple HARQ processes for multiple transmission services over two shared channels; and
Fig. 7 is an exemplary message sequence chart for implementing the invention.

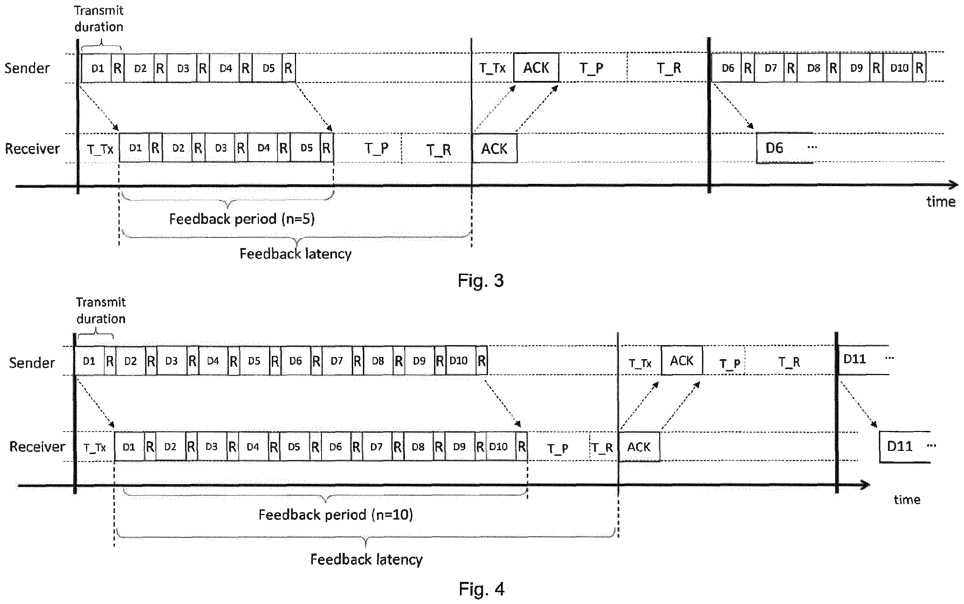

Figs. 2, 3 and 4 show feedback latencies for different configurations of a feedback period n.

Transmitting a feedback message for each received transport block (feedback period "n" = 1) is leading to a very short round trip time, while transmitting a feedback message after reception of multiple transport blocks (n>>1) leads to a longer feedback latency, reduced overhead (e.g. lower number of feedback messages) and thus reduced power consumption for transmission in the receiver.

The principle to use a fixed transmit duration is beneficial, as the physical resource layout (i.e. the arrangement of the physical signals and physical channels within the time-frequency resources) is the same for all selected feedback latencies. Therefore, there is no need to re-configure the physical layer for different latency requirements, and it would be easy to mix transmissions that uses different feedback latencies, e.g. from different UE on the same resource grid or of the same UE and different services.

In addition to the ability of a configurable feedback latency, this invention offers further features to adapt the feedback method to the service needs. Therefore, different methods are described to generate the feedback information for n received transport blocks.
1) Error dominant: Only in case, that no error is detected within all transport blocks of the selected feedback period, the receiver transmits an ACK. Otherwise, a NACK is transmitted. This method is saving signalling resources for configuring the feedback generation, as only the feedback period length "n" (i.e. the number of transport blocks to be considered for the combined feedback) needs to be signalled.
2) Error triggered: The receiver will transmit an ACK message after all "n" blocks within the feedback period were received error free. In case that an error is detected after x ≤ n transport blocks, a NACK is transmitted immediately, i.e. before the selected number of transport blocks "n" were received. This method is beneficial, as it reduces the latency caused by re-transmissions, while the overhead for feedback signalling is low in case of error free receptions. The overhead increases systematically with increasing error rate. This alternative has a nice additional feature: If usage of the "error triggered" feedback is configured, i.e. it is fixed and known to receiver and transmitter, and the feedback information is transmitted with sufficient transmission reliability, then a negative acknowledgement after m transport blocks is an implicit ACK for the preceding (m-1) transport blocks and only requests for re-transmission of the m-th transport block.
3) Error tolerance aware: The receiver has obtained the error tolerance of the related service for the current transmission. In case the ratio of erroneous transport blocks to error free blocks within the feedback period is below the error tolerance, an ACK is transmitted. Otherwise, a NACK is transmitted. This method is beneficial, as less re-transmissions must be send which will additionally reduce the overhead of the ARQ method. This alternative can be combined with the error triggered alternative, so that a negative acknowledgement is only sent after an erroneous transport block was received with which the number of received erroneous transport blocks exceeds the error tolerance of the service.

The HARQ procedure of the invention is different to the HARQ procedure as applied by LTE.

Firstly, the number of HARQ processes "H" used to transmit data of a service is variable and depends on the selected feedback period. In case the feedback period is small, a higher number of HARQ processes is used (e.g. n=1 and H=16). This is done, because the ratio of "round trip time" to "feedback period" is high in this case, i.e. the sending HARQ process has to wait a relatively long time after transmission of the data for the related feedback. "Relatively" in this case refers to the relation of the time for data transmission to the time waiting to receive feedback. Therefore, many parallel HARQ processes are required to enable a fluent data stream while the processes wait for feedback.

If a long feedback period is selected, a lower number of HARQ processes is used (e.g. n=10 and H=2), because the sender can proceed with sending packets on a single process until the n-th packet was send, i.e. each process allows a steady packet flow for n packets which allows longer periods for other processes to receive feedback. Thus, a first HARQ process waits for feedback after n packets were transmitted and the second HARQ process will guarantee a fluent data stream for further transmissions long enough for the first process's feedback to arrive. This lower number of HARQ processes will reduce the complexity in the sender and receiver and is therefore reducing the power consumption.

Secondly, connections from or to a specific device with different service needs, will use a different set of HARQ processes. This is done to simultaneously provide different latency and power consumption properties, as each set of the inventive HARQ processes provides a certain feedback latency and a related level of power consumption.

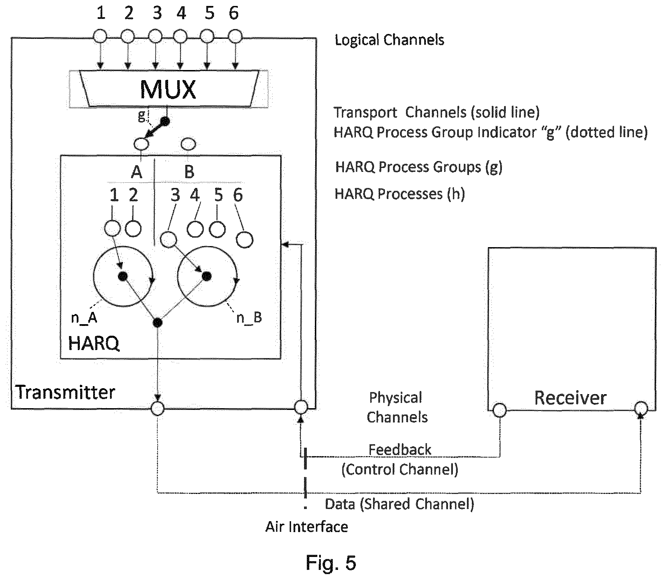

The HARQ architecture is depicted in Fig. 5. This shows, as an example, two HARQ process groups "g", labelled A and B respectively. Each HARQ process group offers a different set of QoS parameters. The principle of these HARQ process groups is, that logical channels are mapped to that HARQ process group, which related parameters "feedback period" and "number of HARQ processes" are suited to provide the QoS parameters of the logical channels. In the preferred example, the number of HARQ processes "H" of each HARQ process group is fixed while the "feedback period" is configurable. HARQ process groups with a small number of HARQ processes allow for a longer feedback period, and vice versa. The transmitter selects a HARQ process group, which range of feedback period is able to fulfil the latency requirements. If multiple HARQ process groups are qualified, it will prefer HARQ process groups with lowest power consumption. A lower number or HARQ processes leads to a lower power consumption of the transmitter and receiver. Table 1 gives exemplary combinations which may be implemented:

**Table 1**

| Number of HARQ processes "H" | 2 | 4 | 8 | 16 |
|---|---|---|---|---|
| Range of Feedback period "n" | 8-32 | 4-16 | 2-8 | 1-4 |

In the example of Fig. 5, group A uses two HARQ processes (1 and 2) and is configured with a long feedback period n_A = 10, while group B uses four HARQ processes (3, 4, 5 and 6) and is configured with a medium feedback period n_B = 5. All HARQ processes are mapped to the same shared channel. A multiplexer MUX decides which HARQ process group "g" should be used for each transport block. This is done based on the parameters configured for the service or logical channel the transport block originates from. The multiplexer indicates the selected HARQ group to the HARQ instance (via the dotted line between MUX and HARQ in Fig. 5).

The multiplexing principle is done with well-known means, e.g. by transmitting data with higher priority first, if no more higher priority data waiting for transmission, data with lower priority will be transmitted, transport blocks from the same HARQ process group are mapped to the same HARQ process, until the configured number "n" of transport blocks have been transmitted. Then, the next "n" transports blocks will be mapped to the next HARQ process from the same HARQ process group. I.e. the first 10 (n_A = 10) transport blocks from HARQ process group A will be mapped to HARQ process 1 and the first 5 (n_B = 5) transport blocks from HARQ process group B will be mapped to HARQ process 3. Assuming that 10 transport blocks of higher priority for HARQ process group B and 10 transport blocks of lower priority for HARQ process group A, awaiting transmission, the final order of HARQ processes on the shared channel is the following (starting with the first transmitted packet):
3, 3, 3, 3, 3, 4, 4, 4, 4, 4, 1, 1, 1, 1, 1, 1, 1, 1, 1, 1, ...

For the sake of simplicity, the receiver in Fig. 5 (and 6) is not shown in full detail. The elements are analogue to the elements of the transmitter.

For correct de-multiplexing of transport blocks and feedback generation at the receiver, it is required for the receiver to know the related HARQ process group of each transport block and the configured feedback period for this HARQ process group. Therefore the feedback period may be fixed (e.g. defined in a standard) or it may be indicated or negotiated prior first transmission to the receiver. The HARQ process number is derived autonomously by the transmitter and receiver, by increasing it by 1 after transmission / reception of the configured number "n" transport blocks. The numbering will be reset to "1", if the new number is exceeding the configured number of HARQ processes.

Further, it is required to indicate the related HARQ process group for each transport block. This mode is called "hybrid" mode in this specification, as it requires autonomous derivation of the HARQ process number within a HARQ process group at transmitter and receiver without signalling, and explicit signalling of the HARQ process group.

Alternatively, an asynchronous HARQ mode can also be applied (not shown in Fig. 5), where each transport block includes the current HARQ process number. In this case, it is sufficient to indicate or negotiate the mapping of HARQ process groups to HARQ process numbers prior first transmission to the receiver, or to simply fix it. The feedback period length can be indicated implicitly, by changing the used HARQ process number for the relevant HARQ process group in the transmitted transport block. The reception of a transport block with a HARQ process number that is different from the process number of the previous transport block will trigger the receiver to transmit feedback. This is beneficial, as it enables a dynamic change of the feedback period length after each transport block and therefore provides an easy way to adapt the transmission to changes of the QoS requirements.

Further, both modes enables a dynamic and individual assignment of the shared channel resources to the HARQ process groups, and therefore for example the data rate can temporarily be enhanced for a certain HARQ process group, without the need to re-configure the shared channel. This can be done by the MUX-entity. E.g. if transport blocks of A should obtain a temporarily enhanced data rate, the multiplexer will transmit more transport blocks that relates to A while retaining transport blocks for the other HARQ process groups.

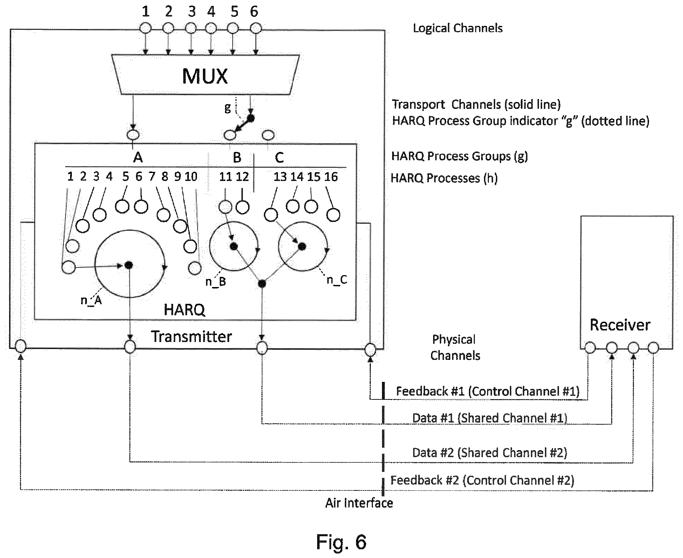

Another example of the inventive HARQ architecture is depicted in Fig. 6.

This example shows three HARQ process groups A, B and C and therefore offers three different sets of QoS. In addition, the example shows a configuration of two shared channels for the data and two related control channels for the HARQ feedback. HARQ process groups B and C are mapped to the shared channel #1, using hybrid mode as described above (cf. Fig. 5) and HARQ process A is mapped exclusively to shared channel #2, whereas synchronous mapping is applied as depicted in figure 6. Nevertheless, also asynchronous mapping is possible for some or all HARQ process groups. This mapping to a separate Shared Channel is beneficial, if the required QoS needs additional means to be fulfilled, e.g. if ultra-low latency is required, a special shared channel can be used in addition to the configuration with the lowest feedback period to further reduce the latency. Or, in a further example, if ultra-low power consumption is required, another special shared channel can be used in addition to the configuration with a very long feedback period to further reduce power consumption.

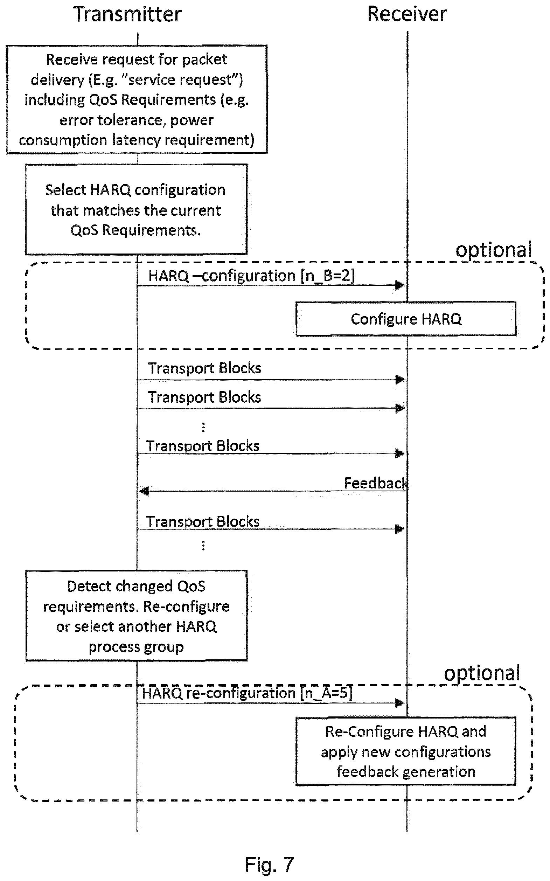

The steps to establish a HARQ session while considering the error tolerance and the latency requirements of the service will now be described. It is assumed, that a connection is already established, which uses HARQ process group A with 2 HARQ processes 1 and 2 and the feedback period of n_A = 10. The feedback mode "error tolerance aware" with a "bit error tolerance" (BET) = 10⁻² has been configured for A and the base station has reserved the required feedback resources. For this it has considered the feedback period, i.e. each time feedback is required, the feedback resource is available. Further, HARQ process group B is configured with four HARQ processes 3 to 6 and n_B = 5. HARQ process group B is currently unused. Therefore, no feedback resources are reserved. It is assumed, that the mapping of HARQ processes to HARQ process groups is fixed, while the feedback period and BET for each HARQ process group are configurable by the transmitter. The message flow is depicted in Fig. 7, with the numbering of the steps corresponding to the following:
1. The transmitter receives a request to transmit data. It includes details about the QoS demand of the related service, e.g. maximum delay, power consumption demand and error tolerance. In his example the requested QoS requirements are "medium delay", "medium power consumption"
2. The transmitter selects a HARQ Process group, that is able to fulfil the QoS requirements of the received request. In this example, a feedback period "n" between 3 and 5 is required. It verifies, which HARQ process group is suited and will use the related HARQ processes. If a matching HARQ process group was found and no re-configuration is required, step 5 is performed next (steps 3 and 4 being skipped). If the current configurations of the available HARQ process groups are not able to provide the requested QoS, the transmitter may decide to re-configure a HARQ process group, e.g. by changing the feedback period. Only in case that HARQ parameters have to be changed, the next two steps are performed. If the selected HARQ process group for the current request was formerly unused, the base station will now reserve the required feedback resources.
3. (only if HARQ re-configuration is required) The transmitter has decided to re-configure HARQ process group B. In this example it changes n_B to 2, as this is the maximum value to fulfil the current latency requirements. Therefore, the transmitter transmits the HARQ configuration with n_B = 2 to the receiver. Further the mapping mode and feedback mode (including the bit error tolerance value, if applicable) can be transmitted within this message. In this example this is not required, as the mapping mode is always "hybrid" and the formerly configured feedback mode should be used.
4. (only if HARQ re-configuration is required) The receiver configures the HARQ with the received parameters, i.e. it configures HARQ process group B with feedback period n_B = 2.
5. The transmitter transmits transport blocks and the receiver transmits feedback according to the current configurations. The hybrid mapping mode is applied, i.e. the transmitter includes the HARQ process group in each transport block and transmitter and receiver will autonomously increase the HARQ process number by 1, after the configured number n of transport blocks was transmitted respectively received. The receiver transmits feedback for A after reception of 10 transport blocks from A. As "error tolerance aware" feedback method is configured, the receiver calculates the packet error tolerance (PET) from the received bit error tolerance (BET). Therefore, it multiplies the number of bits per transport block with the BET value. Assuming a transport block consists of 10 Bits, the PER is 10xBER = 10⁻¹. The receiver now calculates the current packet error rate by summarizing the number of erroneous transport blocks and dividing the sum by the number of transport blocks within a feedback period n_A=10. If the result is below or equal the PER, an ACK is transmitted, otherwise a NACK. In this example, one erroneous transport block within the feedback period leads to a tolerable PER of 10⁻¹. Therefore, the receiver transmits an ACK in case zero or one transport block is erroneous and a NACK otherwise. For B, feedback is transmitted after reception of two transport blocks from B. A NACK is transmitted if an error was detected in one or more transport blocks, an ACK otherwise. The feedback resources are either implicitly known, e.g. they relate to the shared channel resources, or they are explicitly indicated to the receiver.
6. The transmitter detects changed QoS requirements, e.g. in the latency or power consumption requirement. In this example, a service currently operated by HARQ procedure group A requires a shorter latency. The transmitter verifies, whether another currently used HARQ process group with matching parameters exist. HARQ procedure group B is offering a smaller latency (n_B=2 versus n_A=10). If this is sufficient for the new requirement, the transmitter will simply use HARQ process group B from now on for the transports blocks of the related service, i.e. the transport blocks are now marked with B instead of A. In this case, the next two steps are not required. If the HARQ process group A is no more in use, the related feedback resources will be released.
7. (only if HARQ re-configuration is required) In another example, the receiver decides to re-configure HARQ process group A to n_A = 5 to match the new QoS requirements. It configures the HARQ process group A of the transmitter accordingly and will indicate the new parameter n_A=5 to the receiver. Further it will adapt the feedback resources to the new feedback period.
8. (only if HARQ re-configuration is required) The receiver applies the changed HARQ configuration, i.e. will transmit feedback after reception of 5 transport blocks from A.

The above examples assume a fixed mapping of HARQ processes to HARQ process groups.

This is advantageous, as it minimises the signalling to configure this mapping, and as it enables usage of an optimised hardware. It is the preferred example.

In another example, this mapping is flexible and configurable. I.e. the transmitter configures the number of HARQ processes for each HARQ process groups dynamically as required. For example, it may add or remove HARQ processes from a given HARQ process group or it may add or remove one or more complete HARQ process groups. This implies, that the number of overall HARQ processes is variable and enables to release HARQ processes, if they are not used. However, this configuration flexibility requires the need to indicate the current HARQ configuration at connection setup, especially the mapping of HARQ processes to HARQ process groups.

Rules may be devised for the selection of HARQ parameters.

For example, the transmitter may select the HARQ configuration according to following rules:
i) It will consider the QoS needs, especially latency, power consumption and error tolerance, for configuration of HARQ
ii) It will select a smaller feedback period, if the latency need is small and vice versa
iii) It will select a long feedback period, if the power consumption requirement needs a low power consumption and vice versa.
iv) Once the parameters are selected, the transmitter validates, whether a matching HARQ process group is already in use and will assign the new transport blocks to the existing HARQ process group.
v) If no matching HARQ process group exits, a new is established.
vi) The transmitter is reserving the feedback resources according to the feedback period. If the feedback period changes, the feedback resources are adapted to the new feedback period. Unused resources will be released.

## Claims

1. A method performed by a device
for providing configurable feedback latency in a communication system ir which a feedback information message is sent after reception of a data transmission, the method comprising transmitting a single combined feedback information message following receipt of a configurable number of received transport blocks, the feedback information message being generated according to a method selected from:
i) generating the feedback information message after all transport blocks of the configurable number of transport blocks have been received;
ii) generating the feedback information message after all transport blocks of the configurable number of transport blocks have been received if all the transport blocks are received error free, otherwise generating the feedback information message after a receipt of a transport block containing an error; and
iii) generating the positive feedback information message, ACK, if a ratio of erroneous transport blocks to error free transport blocks within a feedback period is less than a predetermined value, otherwise generating the negative feedback information message, NACK,
wherein the single combined feedback information message contains one of a positive feedback information message, ACK, and a negative feedback information message, NACK, and which indicates a correctness of receipt of the configurable number of received transport blocks
and wherein a hybrid automatic repeat request, HARQ, process group is selected for transmitting the configurable number of transport blocks of a given transmission service with a latency requirement, wherein the selected HARQ process group is the HARQ process group that has a smallest number of HARQ processes within a set of selectable HARQ process groups whose range of feedback period is able to fulfil the latency requirement of the given transmission service.

2. The method according to claim 1, wherein a plurality of transport blocks are received and the combined feedback information message provides feedback for the plurality of transport blocks.

3. A device of a mobile communications system for transmitting data to a receiver using a transmission service, the data being transmitted in transport blocks, wherein the device is arranged to transmit a configurable number of transport blocks before receiving a single combined feedback information message from the receiver containing one of a positive feedback information message, ACK, and a negative feedback information message, NACK, and informing the transmitter about a correctness of receipt of the configurable number of transport blocks at the receiver, the feedback information message being generated according to a method selected from:
i) generating the feedback information message after all transport blocks of the configurable number of transport blocks have been received;
ii) generating the feedback information message after all transport blocks of the configurable number of transport blocks have been received if all the transport blocks are received error free, otherwise generating the feedback information message after a receipt of a transport block containing an error; and
iii) generating the positive feedback information message, ACK, if a ratio of erroneous transport blocks to error free transport blocks within a feedback period is less than a predetermined value, otherwise generating the negative feedback information message, NACK,
and wherein a hybrid automatic repeat request, HARQ, process group is selected for transmitting the configurable number of transport blocks of a given transmission service with a latency requirement, wherein the selected HARQ process group is the HARQ process group that has a smallest number of HARQ processes within a set of selectable HARQ process groups whose range of feedback period is able to fulfil the latency requirement of the given transmission service.

4. The device according to claim 3, wherein the device is a user equipment device.

5. The device according to claim 3, wherein the device is a base station.

6. A device of a mobile communications system for receiving data transmitted by a transmitter in transport blocks, the device being arranged to transmit a single combined feedback information message to the transmitter following receipt of a configurable number of transport blocks, wherein the single combined feedback information message contains one of a positive feedback information message, ACK, and a negative feedback information message, NACK, and which indicates a correctness of receipt of the configurable number of received transport blocks, the feedback information message being generated according to a method selected from:
i) generating the feedback information message after all transport blocks of the configurable number of transport blocks have been received;
ii) generating the feedback information message after all transport blocks of the configurable number of transport blocks have been received if all the transport blocks are received error free, otherwise generating the feedback information message after a receipt of a transport block containing an error; and
iii) generating the positive feedback information message, ACK, if a ratio of erroneous transport blocks to error free transport blocks within a feedback period is less than a predetermined value, otherwise generating the negative feedback information message, NACK,
and wherein a hybrid automatic repeat request, HARQ, process group is selected for transmitting the configurable number of transport blocks of a given transmission service with a latency requirement, wherein the selected HARQ process group is the HARQ process group that has a smallest number of HARQ processes within a set of selectable HARQ process groups whose range of feedback period is able to fulfil the latency requirement of the given transmission service.

## Patentansprüche

1. Verfahren, das von einer Vorrichtung durchgeführt wird, um in einem Kommunikationssystem, bei dem nach dem Empfang einer Datenübertragung eine Feedback-Informationsnachricht gesendet wird, konfigurierbare Feedback-Latenz bereitzustellen, wobei das Verfahren das Übertragen einer einzigen kombinierten Feedback-Informationsnachricht im Anschluss an den Empfang einer konfigurierbaren Anzahl von empfangenen Transportblöcken umfasst, wobei die Feedback-Informationsnachricht nach einem Verfahren erzeugt wird, ausgewählt aus:
i) Erzeugen der Feedback-Informationsnachricht, nachdem alle Transportblöcke der konfigurierbaren Anzahl von Transportblöcken empfangen wurden;
ii) Erzeugen der Feedback-Informationsnachricht, nachdem alle Transportblöcke der konfigurierbaren Anzahl von Transportblöcken empfangen wurden, wenn alle Transportblöcke fehlerfrei empfangen werden, andernfalls Erzeugen der Feedback-Informationsnachricht nach Empfang eines Transportblocks, der einen Fehler enthält; und
iii) Erzeugen der positiven Feedback-Informationsnachricht, ACK, wenn ein Verhältnis von fehlerhaften Transportblöcken zu fehlerfreien Transportblöcken in einem Feedback-Zeitraum kleiner ist als ein vorbestimmter Wert, andernfalls Erzeugen der negativen Feedback-Informationsnachricht, NACK,
wobei die einzige kombinierte Feedback-Informationsnachricht eines aus einer positiven Feedback-Informationsnachricht, ACK, und einer negativen Feedback-Informationsnachricht, NACK, enthält, und eine Richtigkeit des Empfangs der konfigurierbaren Anzahl von empfangenen Transportblöcken anzeigt,
und wobei eine Prozessgruppe für eine hybride automatische Wiederholungsanforderung, Hybrid Automatic Repeat Request, HARQ, ausgewählt wird, um die konfigurierbare Anzahl von Transportblöcken eines gegebenen Übertragungsdienstes mit einer Latenzanforderung zu übertragen, wobei es sich bei der ausgewählten HARQ-Prozessgruppe um die HARQ-Prozessgruppe, die eine kleinste Anzahl von HARQ-Prozessen aufweist, in einer Menge von auswählbaren HARQ-Prozessgruppen handelt, deren Feedback-Zeitraumbereich in der Lage ist, die Latenzanforderung des gegebenen Übertragungsdienstes zu erfüllen.

2. Verfahren nach Anspruch 1, wobei eine Vielzahl von Transportblöcken empfangen werden, und die kombinierte Feedback-Informationsnachricht Feedback für die Vielzahl von Transportblöcken bereitstellt.

3. Vorrichtung eines mobilen Kommunikationssystems, um Daten unter Verwendung eines Übertragungsdienstes an einen Empfänger zu übertragen, wobei die Daten in Transportblöcken übertragen werden, wobei die Vorrichtung so eingerichtet ist, dass sie eine konfigurierbare Anzahl von Transportblöcken überträgt, bevor sie eine einzige kombinierte Feedback-Informationsnachricht vom Empfänger empfängt, welche eines aus einer positiven Feedback-Informationsnachricht, ACK, und einer negativen Feedback-Informationsnachricht, NACK, enthält, und den Sender über eine Richtigkeit des Empfangs der konfigurierbaren Anzahl von Transportblöcken am Empfänger informiert, wobei die Feedback-Informationsnachricht nach einem Verfahren erzeugt wird, ausgewählt aus:
i) Erzeugen der Feedback-Informationsnachricht, nachdem alle Transportblöcke der konfigurierbaren Anzahl von Transportblöcken empfangen wurden;
ii) Erzeugen der Feedback-Informationsnachricht, nachdem alle Transportblöcke der konfigurierbaren Anzahl von Transportblöcken empfangen wurden, wenn alle Transportblöcke fehlerfrei empfangen werden, andernfalls Erzeugen der Feedback-Informationsnachricht nach Empfang eines Transportblocks, der einen Fehler enthält; und
iii) Erzeugen der positiven Feedback-Informationsnachricht, ACK, wenn ein Verhältnis von fehlerhaften Transportblöcken zu fehlerfreien Transportblöcken in einem Feedback-Zeitraum kleiner ist als ein vorbestimmter Wert, andernfalls Erzeugen der negativen Feedback-Informationsnachricht, NACK,
und wobei eine Prozessgruppe für eine hybride automatische Wiederholungsanforderung, Hybrid Automatic Repeat Request, HARQ, ausgewählt wird, um die konfigurierbare Anzahl von Transportblöcken eines gegebenen Übertragungsdienstes mit einer Latenzanforderung zu übertragen, wobei es sich bei der ausgewählten HARQ-Prozessgruppe um die HARQ-Prozessgruppe, die eine kleinste Anzahl von HARQ-Prozessen aufweist, in einer Menge von auswählbaren HARQ-Prozessgruppen handelt, deren Feedback-Zeitraumbereich in der Lage ist, die Latenzanforderung des gegebenen Übertragungsdienstes zu erfüllen.

4. Vorrichtung nach Anspruch 3, wobei es sich bei der Vorrichtung um eine Vorrichtung einer Benutzerausrüstung handelt.

5. Vorrichtung nach Anspruch 3, wobei es sich bei der Vorrichtung um eine Basisstation handelt.

6. Vorrichtung eines mobilen Kommunikationssystems, um Daten zu empfangen, die von einem Sender in Transportblöcken übertragen werden, wobei die Vorrichtung so eingerichtet ist, dass sie im Anschluss an den Empfang einer konfigurierbaren Anzahl von Transportblöcken eine einzige kombinierte Feedback-Informationsnachricht an den Sender überträgt, wobei die einzige kombinierte Feedback-Informationsnachricht eines aus einer positiven Feedback-Informationsnachricht, ACK, und einer negativen Feedback-Informationsnachricht, NACK, enthält, und eine Richtigkeit des Empfangs der konfigurierbaren Anzahl von empfangenen Transportblöcken anzeigt, wobei die Feedback-Informationsnachricht nach einem Verfahren erzeugt wird, ausgewählt aus:
i) Erzeugen der Feedback-Informationsnachricht, nachdem alle Transportblöcke der konfigurierbaren Anzahl von Transportblöcken empfangen wurden;
ii) Erzeugen der Feedback-Informationsnachricht, nachdem alle Transportblöcke der konfigurierbaren Anzahl von Transportblöcken empfangen wurden, wenn alle Transportblöcke fehlerfrei empfangen werden, andernfalls Erzeugen der Feedback-Informationsnachricht nach Empfang eines Transportblocks, der einen Fehler enthält; und
iii) Erzeugen der positiven Feedback-Informationsnachricht, ACK, wenn ein Verhältnis von fehlerhaften Transportblöcken zu fehlerfreien Transportblöcken in einem Feedback-Zeitraum kleiner ist als ein vorbestimmter Wert, andernfalls Erzeugen der negativen Feedback-Informationsnachricht, NACK,
und wobei eine Prozessgruppe für eine hybride automatische Wiederholungsanforderung, Hybrid Automatic Repeat Request, HARQ, ausgewählt wird, um die konfigurierbare Anzahl von Transportblöcken eines gegebenen Übertragungsdienstes mit einer Latenzanforderung zu übertragen, wobei es sich bei der ausgewählten HARQ-Prozessgruppe um die HARQ-Prozessgruppe, die eine kleinste Anzahl von HARQ-Prozessen aufweist, in einer Menge von auswählbaren HARQ-Prozessgruppen handelt, deren Feedback-Zeitraumbereich in der Lage ist, die Latenzanforderung des gegebenen Übertragungsdienstes zu erfüllen.

## Revendications

1. Procédé mis en œuvre par un dispositif pour fournir une latence de rétroaction configurable dans un système de communication dans lequel un message d'information de rétroaction est envoyé après réception d'une transmission de données, le procédé comprenant la transmission d'un message d'information de rétroaction combiné unique à la suite d'une réception d'un nombre configurable de blocs de transport reçus, le message d'information de rétroaction étant généré selon un procédé sélectionné parmi :
i) la génération du message d'information de rétroaction après que tous les blocs de transport du nombre configurable de blocs de transport ont été reçus ;
ii) la génération du message d'information de rétroaction après que tous les blocs de transport du nombre configurable de blocs de transport ont été reçus si tous les blocs de transport sont reçus sans erreur, sinon la génération du message d'information de rétroaction après une réception d'un bloc de transport contenant une erreur ; et
iii) la génération du message d'information de rétroaction positive, ACK, si un rapport de blocs de transport erronés sur des blocs de transports sans erreur au sein d'une période de rétroaction est inférieur à une valeur prédéterminée, sinon la génération du message d'information de rétroaction négative, NACK,
dans lequel le message d'information de rétroaction combiné unique contient l'un parmi un message d'information de rétroaction positive, ACK, et un message d'information de rétroaction négative, NACK, et qui indique un caractère correct de réception du nombre configurable de blocs de transport reçus
et dans lequel un groupe de traitement de demande de répétition automatique hybride, HARQ, est sélectionné pour transmettre le nombre configurable de blocs de transport d'un service de transmission donné avec une exigence de latence, dans lequel le groupe de traitement HARQ sélectionné est le groupe de traitement HARQ qui présente le plus petit nombre de traitements HARQ au sein d'un ensemble de groupes de traitement HARQ sélectionnables dont la plage de période de rétroaction est apte à se conformer à l'exigence de latence du service de transmission donné.

2. Procédé selon la revendication 1, dans lequel une pluralité de blocs de transport sont reçus et le message d'information de rétroaction combiné fournit une rétroaction pour la pluralité de blocs de transport.

3. Dispositif d'un système de communication mobile pour transmettre des données à un récepteur à l'aide d'un service de transmission, les données étant transmises dans des blocs de transport, dans lequel le dispositif est agencé pour transmettre un nombre configurable de blocs de transport avant de recevoir un message d'information de rétroaction combiné en provenance du récepteur contenant l'un parmi un message d'information de rétroaction positive, ACK, et un message d'information de rétroaction négative, NACK, et informer le transmetteur au sujet d'une exactitude de réception du nombre configurable de blocs de transport au niveau du récepteur, le message d'information de rétroaction étant généré selon un procédé sélectionné parmi :
i) la génération du message d'information de rétroaction après que tous les blocs de transport du nombre configurable de blocs de transport ont été reçus ;
ii) la génération du message d'information de rétroaction après que tous les blocs de transport du nombre configurable de blocs de transport ont été reçus si tous les blocs de transport sont reçus sans erreur, sinon la génération du message d'information de rétroaction après une réception d'un bloc de transport contenant une erreur ; et
iii) la génération du message d'information de rétroaction positive, ACK, si un rapport de blocs de transport erronés sur des blocs de transports sans erreur au sein d'une période de rétroaction est inférieur à une valeur prédéterminée, sinon la génération du message d'information de rétroaction négative, NACK,
et dans lequel un groupe de traitement de demande de répétition automatique hybride, HARQ, est sélectionné pour transmettre le nombre configurable de blocs de transport d'un service de transmission donné avec une exigence de latence, dans lequel le groupe de traitement HARQ sélectionné est le groupe de traitement HARQ qui présente le plus petit nombre de traitements HARQ au sein d'un ensemble de groupes de traitement HARQ sélectionnables dont la plage de période de rétroaction est apte à se conformer à l'exigence de latence du service de transmission donné.

4. Dispositif selon la revendication 3, dans lequel le dispositif est un dispositif d'équipement utilisateur.

5. Dispositif selon la revendication 3, dans lequel le dispositif est une station de base.

6. Dispositif d'un système de communication mobile pour recevoir des données transmises par un transmetteur dans des blocs de transport, le dispositif étant agencé pour transmettre un message d'information de rétroaction combiné unique au transmetteur à la suite d'une réception d'un nombre configurable de blocs de transport, dans lequel le message d'information de rétroaction combiné unique contient l'un parmi un message d'information de rétroaction positive, ACK, et un message d'information de rétroaction négative, NACK, et qui indique un caractère correct de réception du nombre configurable de blocs de transport reçus, le message d'information de rétroaction étant généré selon un procédé sélectionné parmi :
i) la génération du message d'information de rétroaction après que tous les blocs de transport du nombre configurable de blocs de transport ont été reçus ;
ii) la génération du message d'information de rétroaction après que tous les blocs de transport du nombre configurable de blocs de transport ont été reçus si tous les blocs de transport sont reçus sans erreur, sinon la génération du message d'information de rétroaction après une réception d'un bloc de transport contenant une erreur ; et
iii) la génération du message d'information de rétroaction positive, ACK, si un rapport de blocs de transport erronés sur des blocs de transports sans erreur au sein d'une période de rétroaction est inférieur à une valeur prédéterminée, sinon la génération du message d'information de rétroaction négative, NACK,
et dans lequel un groupe de traitement de demande de répétition automatique hybride, HARQ, est sélectionné pour transmettre le nombre configurable de blocs de transport d'un service de transmission donné avec une exigence de latence, dans lequel le groupe de traitement HARQ sélectionné est le groupe de traitement HARQ qui présente le plus petit nombre de traitements HARQ au sein d'un ensemble de groupes de traitement HARQ sélectionnables dont la plage de période de rétroaction est apte à se conformer à l'exigence de latence du service de transmission donné.
